(19) Europäisches Patentamt
European Patent Office
Office européen des brevets

(11) **EP 4 361 212 A1**

(12) **EUROPEAN PATENT APPLICATION**
published in accordance with Art. 153(4) EPC

(43) Date of publication:
**01.05.2024  Bulletin 2024/18**

(21) Application number: **22828545.8**

(22) Date of filing: **24.06.2022**

(51) International Patent Classification (IPC):
*C08L 23/10* (2006.01)   *B65D 65/40* (2006.01)
*C08F 2/44* (2006.01)    *C08F 255/02* (2006.01)
*C08L 23/08* (2006.01)   *C08L 23/16* (2006.01)

(52) Cooperative Patent Classification (CPC):
**B65D 65/40; C08F 2/44; C08F 255/02; C08L 23/08;
C08L 23/10; C08L 23/16**

(86) International application number:
**PCT/JP2022/025362**

(87) International publication number:
**WO 2022/270629 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.06.2021  JP 2021105708**

(71) Applicant: **Basell Poliolefine Italia S.r.l.
20121 Milano (IT)**

(72) Inventors:
• **KURIYAMA Minoru**
  **Kawasaki-shi, Kanagawa 210-0863 (JP)**
• **NAKAJIMA Takeshi**
  **Kawasaki-shi, Kanagawa 210-0863 (JP)**

(74) Representative: **LyondellBasell
c/o Basell Poliolefine Italia
Intellectual Property
P.le Donegani 12
44122 Ferrara (IT)**

(54) **POLYPROPYLENE RESIN COMPOSITION, SHEET MOLDED BODY, AND CONTAINER**

(57)    The present invention provides a polypropylene-based resin composition comprising a polypropylene-based resin (A) including a continuous phase consisting of a propylene polymer (a1) and a rubber phase consisting of a copolymer (a2) of ethylene and $\alpha$-olefin having 3-10 carbon atoms, and an ethylene/$\alpha$-olefin copolymer (B) which is a polymer of ethylene and an $\alpha$-olefin having 2-10 carbon atoms, and an inorganic filler (C) as an optional component, having the MFR at a temperature of 230 °C and a load of 2.16 kg of 0.1 to 3.0 g/10 minutes.

EP 4 361 212 A1

**Description**

TECHNICAL FIELD

The present invention relates to a polypropylene-based resin composition, sheet molding and container. This application claims priority based on Japanese Patent Application No. 2021-105708 filed in Japan on June 25, 2021, the contents of which are incorporated herein.

BACKGROUND TECHNOLOGY

Polypropylene is used for various purposes because it has excellent physical properties such as impact resistance, rigidity, transparency, chemical resistance, and heat resistance.

For example, Patent Document 1 discloses a polypropylene-based resin composition suitable for obtaining an injection molded article with an excellent balance of rigidity and impact resistance and a good appearance.

PRIOR ART DOCUMENT

Patent document 1: Japanese Unexamined Patent Application Publication No. 2019-189818.

SUMMARY OF THE INVENTION

PROBLEM TO BE SOLVED BY THE INVENTION

When obtaining a sheet molding from a polypropylene-based resin composition, the polypropylene-based resin composition is required to have high drawdown resistance, good sheet moldability, and good sheet productivity.

On the other hand, containers (for example, cups, plates, trays, bottles, etc.,) formed further from sheet molding as ingredient materials are required to have mechanical properties such as rigidity and impact resistance. For example, ice cream containers are required to have excellent impact resistance at extremely low temperatures of about -40 °C. This is a physical property which is on a different level from the impact resistance around -5 °C, and it has been considerably difficult for conventional polypropylene-based resin compositions to meet this requirement.

The present invention provides a sheet molding and a container that have excellent impact resistance at extremely low temperatures of -40 °C, and a polypropylene-based resin composition that can form the sheet molding.

ISSUES TO BE ADDRESSED

The present invention has the following aspects.

[1] A polypropylene-based resin composition comprising

a polypropylene-based resin (A) including a continuous phase consisting of a propylene polymer (a1) and a rubber phase consisting of a copolymer (a2) of ethylene and $\alpha$-olefin having 3 to 10 carbon atoms, and an ethylene/$\alpha$-olefin polymer (B) which is a polymer of ethylene and $\alpha$-olefin having 2 to 10 carbon atoms, and an inorganic filler (C) as an optional component,
wherein the MFR of the polypropylene-based resin composition at a temperature of 230 °C and a load of 2.16 kg is 0.1 to 3.0 g/10 minutes,
the total weight of the (A), (B) and (C) is 70 % by weight or more with respect to the total weight of the polypropylene-based resin composition,
the total weight of the (A) and (B) is 50 % by weight or more with respect to the total weight of the polypropylene-based resin composition,
the content of the (A) is 99 parts by weight or less, the content of the (B) is 1 part by weight or more, and the content of the (C) is 0 to 60 parts by weight with respect to the total 100 parts by weight of the (A), (B),
the content of ethylene-derived units in the propylene polymer (a1) is 0.5 % by weight or less with respect to the total weight of the propylene polymer (a1),
the content of the copolymer (a2) is 27 to 45 % by weight with respect to the total weight of the polypropylene-based resin (A),
the content of ethylene-derived units in the copolymer (a2) is 25 to 85 % by weight with respect to the total weight of the copolymer (a2),
the xylene-soluble portion of the polypropylene-based resin (A) has an intrinsic viscosity in tetrahydronaphthalene at 135 °C of 2.5 to 5.5 dl/g.

[2] The polypropylene-based resin composition according to [1], wherein the crystallization peak observed between 85 and 105 °C has a calorific value of 0.5 to 10 J/g in DSC measurement of said polypropylene-based resin (A).
[3] The polypropylene-based resin composition according to [1] or [2], wherein said propylene polymer (a1) has an average pore diameter of 8 to 50 μm.
[4] A sheet molding formed from the polypropylene-based resin composition according to any one of [1] to [3].
[5] The sheet molding according to [4], which is used to form a container.
[6] A container formed from the sheet molding according to [4] or [5].

EFFECTS OF THE INVENTION

By using the polypropylene-based resin composition of the present invention, a sheet molding having excellent impact resistance at extremely low temperatures of about -40 °C can be obtained. A container formed from this polypropylene-based resin composition or sheet molding as ingredient material can exhibit excellent impact resistance at extremely low temperatures of -40 °C.
In addition to the applications for container, it may be used for the applications including, for example, miscellaneous goods, daily necessities, home appliance parts, electrical and electronic parts, automobile parts, housing parts, toy parts, furniture parts, building material parts, packaging parts, industrial materials, logistics materials, agricultural materials, etc (including the case where it is used in the form of plastic cardboard).

BRIEF DESCRIPTION OF THE DRAWINGS

FIG. 1 is a perspective view of a sheet molding according to an example of the present invention.
FIG. 2 is a perspective view of a container according to an example of the present invention.
FIG. 3 is an example of a DSC chart of a sample taken from the polypropylene-based resin pellets produced in Examples.

EMBODIMENTS FOR IMPLEMENTING THE INVENTION

<Polypropylene-based resin composition>

The polypropylene-based resin composition of the present invention comprises a polypropylene-based resin (A) (hereinafter also referred to as component (A)) including a continuous phase consisting of a propylene polymer (hereinafter also referred to as component (a1)) and a rubber phase consisting of a copolymer of ethylene and α-olefin having 3 to 10 carbon atoms (hereinafter also referred to as component (a2)), and an ethylene/α-olefin polymer (B) (hereinafter also referred to as component (B)) which is a polymer of ethylene and α-olefin having 2 to 10 carbon atoms.
Furthermore, as an optional component, it may comprise or not comprise an inorganic filler (C) (hereinafter also referred to as component (C)).
The total weight of component (A), component (B) and component (C) is 70 % by weight or more with respect to the total weight of said polypropylene-based resin composition, and the lower limit is preferably 80 % by weight or more, more preferably 90% by weight or more, and even more preferably 95 % by weight or more. The upper limit is preferably below 100 % by weight.
When it is at or more than the lower limit of the above range, the impact resistance of the sheet molding of the present invention at extremely low temperatures increases. If it is less than the upper limit of the above range, there is room for containing other components such as antioxidant or neutralizing agents.
The total weight of component (A) and component (B) is 50 % by weight or more with respect to the total weight of said polypropylene-based resin composition, and the lower limit is preferably 60 % by weight or more, more preferably 70% by weight or more, even more preferably 80 % by weight or more, and particularly preferably 95 % by weight or more. The upper limit is preferably below 100 % by weight.
If it is at or more than the lower limit of the above range, the impact resistance of the sheet molding of the present invention at extremely low temperatures increases. If it is less than the upper limit of the above range, there is room for containing other components such as antioxidant or neutralizing agents.
The content of component (A) is 99 parts by weight or less with respect to the total 100 parts by weight of the component (A) and component (B), and the lower limit is preferably 70 parts by weight or more, more preferably 80 parts by weight or more. The upper limit is preferably 95 parts by weight or less, more preferably 90 parts by weight or less.

That is, examples include the ranges of 70 to 99 parts by weight, 70 to 95 parts by weight, 70 to 90 parts by weight, 80 to 99 parts by weight, 80 to 95 parts by weight, and 80 to 90 parts by weight. When it is at or more than the lower limit of the above range, the rigidity of the sheet molding increases. When it is at or less than the upper limit of the above range, the content of component (B) will be relatively high, and the impact resistance of the sheet molding of the present invention at extremely low temperatures increases.

The content of component (B) is 1 part by weight or more with respect to the total 100 parts by weight of the component (A) and component (B), and the lower limit is preferably 5 parts by weight or more, more preferably 10 parts by weight or more. The upper limit is preferably 30 parts by weight or less, more preferably 20 parts by weight or less. That is, examples include the ranges of 1 to 30 parts by weight, 1 to 20 parts by weight, 5 to 30 parts by weight, 5 to 20 parts by weight, 10 to 30 parts by weight, and 10 to 20 parts by weight.

When it is at or more than the lower limit of the above range, the impact resistance of the sheet molding at extremely low temperatures increases.

When it is at or less than the upper limit of the above range, the content of component (A) will be relatively high, and the rigidity of the sheet molding of the present invention increases.

The content of component (C) is 0 to 60 parts by weight with respect to the total 100 parts by weight of component (A) and component (B), and the upper limit is preferably 40 parts by weight or less, and more preferably 30 parts by weight or less.

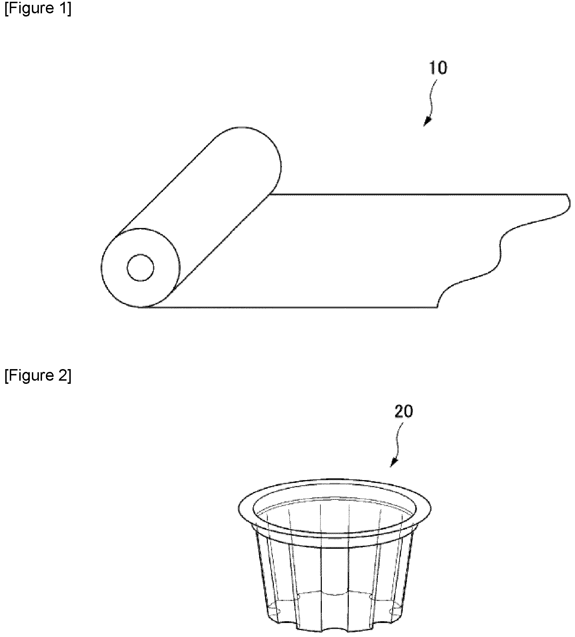

When it is at or less than the upper limit of the above range, it becomes easy to mold a sheet molding from the polypropylene-based resin composition of the present invention and to form a container from the sheet molding. Figs. 1 and 2 show a sheet molding 10 and a cup-shaped container 20 formed from the sheet molding as an example of the present invention. Moreover, by including component (C), the rigidity (stiffness) of the sheet molding increases.

The MFR of the polypropylene-based resin composition at a temperature of 230 °C and a load of 2.16 kg is 0.1 to 3.0 g/10 minutes, and the lower limit is preferably 0.2 g/10 minutes or more, and more preferably 0.3 g/10 minutes or more. Further, the upper limit is preferably 2.5 g/10 minutes or less, more preferably 1.8 g/10 minutes or less, and even more preferably 1.0 g/10 minutes or less. In other words, the examples include the ranges of 0.1 to 2.5 g/10 minutes, 0.1 to 1.8 g/10 minutes, 0.1 to 1.0 g/10 minutes, 0.2 to 3.0 g/10 minutes, 0.2 to 2.5 g/10 minutes, 0.2 to 1.8 g /10 minutes, 0.2 to 1.0 g/10 minutes, 0.3 to 3.0 g/10 minutes, 0.3 to 2.5 g/10 minutes, 0.3 to 1.8 g/10 minutes, 0.3 to 1.0 g/10 minutes. Here, MFR is a value measured by a measurement method described herein later.

When it is at or more than the lower limit of the above range, sheet moldability is excellent. In addition, manufacturing is usually difficult by adjusting it to less than 0.1 g/10 minutes.

When it is at or less than the upper limit of the above range, sheet moldability (drawdown resistance) and sheet productivity are improved, and the impact resistance of the sheet molding at extremely low temperatures increases.

[Polypropylene-based resin (A)]

The polypropylene-based resin (A) included in the polypropylene-based resin composition of the present invention is an embodiment of an impact-resistant polypropylene polymer specified by JIS K6921-1, and is composed of two or more phases including a continuous phase of propylene polymer (component (a1)) and a rubber phase of ethylene/$\alpha$-olefin copolymer (component (a2)) present in the continuous phase as a dispersed phase.

The polypropylene-based resin (A) may be a mixed resin in which component (a1) and component (a2) are mixed during polymerization, or in which component (a1) and component (a2), obtained separately, are mixed by melt kneading. It is preferable that component (a1) and component (a2) are mixed during polymerization (polymerization mixture) because the excellent balance between rigidity, low-temperature impact resistance and tensile properties (hereinafter also referred to as "mechanical physical property balance") is obtained at lower cost.

In the polymerization mixture, component (a1) and component (a2) can be mixed each other on the submicron order and a polypropylene-based resin composition based on the polymerization mixture exhibits an excellent balance of mechanical physical properties.

On the other hand, if a simple mechanical mixture obtained by melt-kneading of component (a1) and component (a2), obtained separately, is used to achieve similar uniform mixing and obtain an excellent balance of mechanical physical properties, the manufacturing costs increase due to the need for separate processes such as storage, transport, measuring, mixing, melting and kneading. This is also unfavorable from the viewpoint of energy costs. The reason why the polymerization mixture and the mechanical mixture may exhibit different physical properties is presumed to be due to the difference in the dispersion state of component (a2) in component (a1). Currently, there is no known practical means for analyzing the dispersion state of component (a2) in the molecular level, including the state of the interface with component (a1). The method for producing the polypropylene-based resin (A) will be explained in detail later.

Intrinsic viscosity of the xylene-soluble portion of the polypropylene-based resin (A) (hereinafter also referred to as "XSIV") is 2.5 to 5.5 dl/g, and the lower limit is preferably 2.7 dl/g or more. Further, the upper limit is preferably 4.5 dl/g or less, more preferably 4.0 dl/g or less and even more preferably 3.5 dl/g or less. That is, examples include the ranges of 2.5 to 4.5 dl/g, 2.5 to 4.0 dl/g, 2.5 to 3.5 dl/g, 2.7 to 5.5 dl/g, 2.7 to 4.5 dl/g, 2.7 to 4.0 dl/g, and 2.7 to 3.5 dl/g. Here, XSIV is the value measured by a method described later.

When it is at or more than the lower limit of the above range, the impact resistance of the sheet molding at extremely low temperatures increases.

When it is at or less than the upper limit of the above range, the productivity of the polypropylene-based resin (A) increases. In addition, the sheet moldability is improved, and the impact resistance of the sheet molding at extremely low temperatures increases.

The ratio of the weight average molecular weight $M_w$ to the number average molecular weight $M_n$ ($M_w/M_n$), which is an index of the molecular weight distribution of the propylene polymer (component (a1)) constituting the polypropylene-based resin (A), is preferably 9 or less, more preferably 8 or less and even more preferably less than 7. When it is within the above preferable range, the impact resistance of the sheet molding at extremely low temperatures increases.

The lower limit of the above ratio is not particularly limited, and, for example, 3 or more can be mentioned as a guide.

Here, the weight average molecular weight $M_w$ and number average molecular weight $M_n$ of the propylene polymer are the values measured by the method described below.

Ethylene-derived unit content (hereinafter also referred to as "C2") in the propylene polymer (component (a1)) constituting the polypropylene-based resin (A) is 0.5% by weight or less, preferably 0.3% by weight or less, with respect to the total weight of the propylene polymer. When C2 is at or less than the upper limit value, the rigidity of the sheet molding increases. The lower limit of C2 is not particularly limited and may be 0% by weight.

In other words, the propylene polymer may be a polypropylene homopolymer consisting only of propylene-derived units, or a copolymer consisting of between 99.5% by weight or more and less than 100% by weight of propylene-derived units and between more than 0% by weight and 0.5% by weight or less of ethylene-derived units. C2 is measured by $^{13}$C-NMR method.

The average pore diameter (Dn) of component (a1) is preferably 8 to 50 $\mu$m, more preferably 8 to 30 $\mu$m, and even more preferably 8 to 15 $\mu$m.

Dn is the average value of the pore diameter D measured by the mercury intrusion method according to JIS R1655. When Dn is within this range, the powder fluidity of the polypropylene-based resin (A) consisting of component (a1) and component (a2) is improved, and as a result, productivity is improved. Although this mechanism is not clear, it is presumed that when component (a1) has Dn within the above range, both the size of the pores and the total surface area of the pores are sufficient due to the presence of component (a2) in component (a1), and as a result, component (a2) is easily retained in component (a1) thereby the powder fluidity of the polymer is improved.

The ethylene/$\alpha$-olefin copolymer (component (a2)) constituting the polypropylene-based resin (A) is a copolymer having an ethylene-derived unit and $\alpha$-olefin-derived unit having 3 to 10 carbon atoms.

The content of ethylene-derived units in component (a2) is 25 to 85 % by weight with respect to the total weight of component (a2), and the lower limit is preferably 29 % by weight or more, more preferably 40 % by weight or more and even more preferably 45 % by weight or more. Further, the upper limit is preferably 70 % by weight or less, more preferably 60 % by weight or less and even more preferably 55 % by weight or less. That is, examples include the ranges of 25 to 70 % by weight, 25 to 60 % by weight, 25 to 55 % by weight, 29 to 85% by weight, 29 to 70 % by weight, 29 to 60 % by weight, 29 to 55 % by weight, 40 to 85 % by weight, 40 to 70 % by weight, 40 to 60 % by weight, 40 to 55 % by weight, 45 to 85 % by weight, 45 to 70 % by weight, 45 to 60 % by weight, and 45 to 55 % by weight.

When it is at or more than the lower limit of the above range, the impact resistance of the sheet molding at extremely low temperatures increases.

When it is at or less than the upper limit of the above range, it is possible to reduce the risk of clogging the flow path on the production equipment due to the deterioration of powder fluidity during the production of the polypropylene-based resin (A), so that the polypropylene-based resin (A) can be stably produced continuously.

The content of ethylene-derived units in component (a2) is measured by $^{13}$C-NMR method.

The content of the ethylene/$\alpha$-olefin copolymer (component (a2)) with respect to the total weight of the polypropylene-based resin (A) is 27 to 45 % by weight, and the lower limit is preferably 29 % by weight or more, and more preferably 32 % by weight or more. Further, the upper limit is preferably 42 % by weight or less, more preferably 38 % by weight or less. That is, examples include the ranges of 27 to 42 % by weight, 27 to 38 % by weight, 29 to 45 % by weight, 29 to 42 % by weight, 29 to 38 % by weight, 32 to 45 % by weight, 32 to 42 % by weight, and 32 to 38 % by weight.

When it is at or more than the lower limit of the above range, the impact resistance of the sheet molding at extremely low temperatures increases.

When it is at or less than the upper limit of the above range, it is possible to reduce the risk of clogging the flow path on the production equipment due to the deterioration of powder fluidity during the production of the polypropylene-based resin (A), so that the polypropylene-based resin (A) can be stably produced continuously.

Further, depending on the content of component (a2), the content of component (a1) is preferably 55 to 73 % by weight with respect to the total weight of the polypropylene-based resin (A). In this suitable range, the lower limit is preferably 58 % by weight or more, more preferably 62 % by weight or more, and the upper limit is preferably 71 % by weight or less, more preferably 68 % by weight or less. That is, the examples include the ranges of 55 to 71 % by weight, 55 to 68 % by weight, 58 to 73 % by weight, 58 to 71 % by weight, 58 to 68 % by weight, 62 to 73 % by weight, 62 to 71 % by weight, and 62 to 68 % by weight.

Examples of the $\alpha$-olefin constituting the ethylene/$\alpha$-olefin copolymer (component (a2)) include propylene (1-propene), 1-butene, 1-pentene, 1-hexene, and 1-octene.

Specific examples of component (a2) include ethylene/propylene copolymer, ethylene/butene copolymer, ethylene/pentene copolymer, ethylene/hexene copolymer, ethylene/octene copolymer, and the like.

Among these, ethylene/propylene copolymers are preferred in consideration of improving the productivity of the polypropylene-based resin (A).

The MFR of the polypropylene-based resin (A) at a temperature of 230 °C and a load of 2.16 kg, i.e., the MFR of component (a1) + component (a2), is preferably 0.1 g/10 minutes or more as the lower limit, more preferably 0.2 g/10 minutes or more, and even more preferably 0.3 g/10 minutes or more. Further, the upper limit is preferably 2.5 g/10 minutes or less, more preferably 1.8 g/10 minutes or less, and even more preferably 1.0 g/10 minutes or less. In other words, examples include the ranges of 0.1 to 2.5 g/10 minutes, 0.1 to 1.8 g/10 minutes, 0.1 to 1.0 g/10 minutes, 0.2 to 2.5 g/10 minutes, 0.2 to 1.8 g/10 minutes, 0.2 to 1.0 g/10 minutes, 0.3 to 2.5 g/10 minutes, 0.3 to 1.8 g/10 minutes, and 0.3 to 1.0g/10 minutes. Here, MFR is a value measured by a measurement method described later.

When it is at or more than the lower limit of the above range, sheet moldability is excellent. In addition, manufacturing is usually difficult by adjusting it to less than 0.1 g/10 minutes.

When it is at or less than the upper limit of the above range, sheet moldability (drawdown resistance) and sheet productivity are improved, and the impact resistance of the sheet molding at extremely low temperatures increases.

In DSC (differential scanning calorimetry) of the polypropylene-based resin (A), it is preferable that a crystallization peak is observed between 85 and 105 °C. This crystallization peak originates from the crystallization of the polyethylene component of the ethylene/$\alpha$-olefin copolymer (component (a2)) constituting the polypropylene-based resin (A). As described below, generally, when an ethylene/$\alpha$-olefin copolymer is polymerized using a Ziegler-Natta catalyst, components with different contents of ethylene-derived units are produced (so-called compositional distribution exists), and as a result, when the content of ethylene-derived units in the component (a2) exceeds a certain level, a long ethylene chain component (polyethylene component) that can be crystallized is generated. The polyethylene component is particularly effective for the impact resistance at low temperatures, and when the component (a2) constituting the polypropylene-based resin (A) contains a polyethylene component, the impact resistance at extremely low temperatures of the present invention is further improved. For this reason, even if the amount of the ethylene/$\alpha$-olefin polymer (B) added to the polypropylene-based resin (A) is small, impact resistance at extremely low temperatures can be sufficiently effected.

The calorific value ($\Delta$Hc) of the crystallization peak observed between 85 and 105 °C in DSC is an index of the amount of polyethylene component contained in the polypropylene-based resin (A), and depends on the content of component (a2) in the polypropylene-based resin (A). In addition to the ethylene-derived unit content of component (a2), it also depends on the catalyst and polymerization conditions during production of the polypropylene-based resin (A).

When DSC of polypropylene-based resin (A) is performed by the method described below, the lower limit of $\Delta$Hc observed between 85 and 105 °C is preferably 0.5 J/g or more from the viewpoint of increasing the impact resistance at extremely low temperatures, and more preferably 1.0 J/g or more. On the other hand, when $\Delta$Hc is 10 J/g or less, the rigidity is maintained and the affinity between component (a1) and component (a2) is maintained, and thus the balance between the rigidity and impact resistance becomes better. The more preferable upper limit of $\Delta$Hc is 8.0 J/g or less. That is, examples include the ranges of 0.5 to 10 J/g, 0.5 to 8.0 J/g, 1.0 to 10 J/g, and 1.0 to 8.0 J/g.

[Ethylene/$\alpha$-olefin copolymer (B)]

The ethylene/$\alpha$-olefin copolymer (B) is a copolymer of ethylene and $\alpha$-olefin having 2 to 10 carbon atoms. Examples of the $\alpha$-olefin include ethylene, propylene (1-propene), 1-butene, 1-pentene, 1-hexene, and 1-octene.

Specific examples of the ethylene/$\alpha$-olefin copolymer (B) include polyethylene, ethylene/butene copolymer, ethylene/pentene copolymer, ethylene/hexene copolymer, ethylene/octene copolymer, and the like.

Among these, polyethylene is preferred from the viewpoint of increasing the impact resistance of the sheet molding at extremely low temperatures. For polyethylene, high density polyethylene (HDPE) is preferred. The density of HDPE is measured at 23 °C $\pm$ 2 °C in accordance with JIS K6922-1:2018, and is preferably greater than 940 kg/m³, and preferably greater than 954 kg/m³. For the upper limit of the density of HDPE, 990 kg/m³ can be mentioned as a guide.

[Inorganic filler (C)]

Examples of the inorganic filler (C) include natural silicic acid or silicate such as talc, kaolinite, clay, virophyllite, selenite, wollastonite, and mica; synthetic silicic acid or silicate such as hydrated calcium silicate, hydrated aluminum silicate, hydrated silicic acid, and anhydrous silicic acid; carbonates such as precipitated calcium carbonate, ground calcium carbonate, and magnesium carbonate; hydroxides such as aluminum hydroxide and magnesium hydroxide; oxides such as zinc oxide and magnesium oxide.

Further, from the viewpoint of shape, examples of the inorganic filler include the following; Powdered fillers such as synthetic silicic acid or silicate such as hydrated calcium silicate, hydrated aluminum silicate, hydrated silicic acid, and anhydrous silicic acid; plate-shaped fillers such as talc, kaolinite, clay, and mica; whisker-like fillers such as basic magnesium sulfate whiskers, calcium titanate whiskers, aluminum borate whiskers, sepiolite, PMF (Processed Mineral Filler), xonotlite, potassium titanate, and elastadite; balloon-like fillers such as glass balloons, fly ash balloons; fibrous fillers such as glass fibers.

One type of inorganic filler may be used, or two or more types may be used in combination. In order to improve the dispersibility of these fillers, the inorganic fillers may be subjected to surface treatment if necessary. Although the inorganic filler used in the present invention is not limited, a plate-shaped inorganic filler is preferable from the viewpoint of improving the balance of mechanical properties by promoting the orientation of polypropylene crystals in the sheet molding.

As the plate-shaped inorganic filler, known materials such as talc, kaolinite, clay, and mica can be used. In consideration of the affinity with polypropylene-based resin, ease of procurement as a raw material and economic efficiency, talc, mica are preferred, and talc is more preferable.

The volume average particle diameter of the inorganic filler (C) is preferably 1 to 10 $\mu$m, more preferably 2 to 7 $\mu$m. If the volume average particle diameter is within the above range, the mechanical property balance of the sheet molding will be high. The volume average particle diameter can be measured as a 50 % diameter in a volume-based integrated fraction by a laser diffraction method (based on JIS R1629).

[Other components]

The polypropylene-based resin composition of the present invention may comprise synthetic resins or synthetic rubbers other than the polypropylene-based resin (A) and the ethylene/$\alpha$-olefin copolymer (B), and additives as optional components within a range that does not impair the effects of the present invention besides the polypropylene-based resin (A), the ethylene/$\alpha$-olefin copolymer (B) and the inorganic filler (C).

Examples of the additives include, for example, antioxidants, neutralizing agents, nucleating agents, weathering agents, pigments (organic or inorganic), internal and external lubricants, anti-blocking agents, antistatic agents, chlorine absorbers, heat stabilizers, light stabilizers, ultraviolet absorbers, slip agents, antifogging agents, flame retardants, dispersants, copper damage inhibitors, plasticizers, foaming agents, antifoaming agents, crosslinking agents, peroxides, oil extenders, etc. These additives may be used alone or two or more types may be used. The content may be a known amount.

<Method for producing polypropylene-based resin composition>

As a method for producing the polypropylene-based resin composition of the present invention, the examples include a method in which a polypropylene-based resin (A) and ethylene/$\alpha$-olefin copolymer (B) and an inorganic filler (C) are mixed and then melt-kneaded. Examples of the mixing method include dry blending using a mixer such as a Henschel mixer, a tumbler, and a ribbon mixer.

Examples of the melt-kneading method include a method of mixing while melting using a mixer such as a single-screw extruder, a twin-screw extruder, a Banbury mixer, a kneader, and a roll mill. The melting temperature during melt-kneading is preferably 160 to 350 °C, more preferably 170 to 260 °C. Further pelletizing may be conducted after melt-kneading.

When blending component (C), component (C) may be dry blended to the pellets containing at least one of component (A) and component (B). The dry blended component (C) is mixed uniformly to component (A) and component (B) which are melted during molding the polypropylene-based resin composition. In addition, in the present invention, so-called masterbatch which is prepared by melt-kneading component (C) of high concentration with a resin component may be added to at least one of component (A) and component (B) and melt-knead, or it may be dry blended with pellets containing at least one of component (A) and component (B). In this case, the ratio of the resin component contained in the masterbatch and the amount of the added masterbatch are adjusted so that the resin component contained in the masterbatch do not affect the physical properties of the polypropylene-based resin composition.

The content of the resin component contained in the masterbatch is preferably 30 % by weight or less, more preferably 25 % by weight or less, and even more preferably 20 % by weight or less with respect to the total weight of the polypropylene-based resin composition of this embodiment. Within the above preferred range, the adverse effect on the physical properties of the polypropylene-based resin composition caused by the resin component contained in the masterbatch can be prevented. Although the type of the resin component is not limited, olefin-based resin is preferred in consideration of their affinity with the polypropylene-based resin and ethylene/α-olefin copolymer that constitute the composition.

The content of the masterbatch is preferably 100 parts by weight or less, more preferably 70 parts by weight or less, and even more preferably 50 parts by weight or less with respect to the total of 100 parts by weight of component (A) and component (B). Within the above preferred range, the rigidity of the sheet can be increased without impairing the sheet moldability or the impact resistance of the sheet at extremely low temperatures.

[Production method of polypropylene-based resin (A)]

Polypropylene-based resin (A) is obtained by mixing a propylene polymer (component (a1)) and an ethylene/α-olefin copolymer (component (a2)) during polymerization. Alternatively, the component (a1) and the component (a2), produced separately, may be mixed by melt-kneading.

It is preferable that the polypropylene-based resin (A) is a polymerization mixture wherein the component (a1) and component (a2) are mixed during polymerization.

Such a polymerization mixture is obtained by polymerizing ethylene monomer and α-olefin monomer in the presence of component (a1). According to this method, productivity is increased, and the dispersibility of component (a2) in component (a1) is increased, so that the balance of mechanical physical properties of the sheet molding obtained using this method is improved.

Hereinafter, a case in which a propylene monomer is used as the α-olefin monomer will be described, which can also be used in the production when using other α-olefin monomers.

As a method for producing the polymerization mixture, a multistage polymerization method is typically used. For example, the polymerization mixture can be obtained as follows: propylene monomer and, if necessary, ethylene monomer are polymerized to obtain a propylene polymer in the first stage polymerization reactor of a polymerization apparatus equipped with two stages of polymerization reactors, and the resulting polypropylene polymer is supplied to the second stage polymerization reactor and the ethylene monomer and propylene monomer are polymerized therein.

Polymerization conditions may be similar to known polymerization conditions. For example, the first stage polymerization conditions include a slurry polymerization method in which propylene is in the liquid phase and the monomer density and productivity are high. As the second-stage polymerization conditions, a gas phase polymerization method that generally allows easy production of a copolymer with high solubility in propylene can be mentioned. The polymerization temperature is preferably 50 to 90 °C, more preferably 60 to 90 °C, even more preferably 70 to 90 °C. When the polymerization temperature is at or more than the lower limit of the above range, the productivity and the stereoregularity of the obtained polypropylene are more excellent.

The polymerization pressure is preferably 25 to 60 bar (2.5 to 6.0 MPa), more preferably 33 to 45 bar (3.3 to 4.5 MPa) when carried out in a liquid phase. When carried out in a gas phase, the pressure is preferably 5 to 30 bar (0.5 to 3.0 MPa), more preferably 8 to 30 bar (0.8 to 3.0 MPa).

Polymerization (polymerization of propylene monomer, polymerization of ethylene monomer, propylene monomer, etc.,) is usually carried out using a catalyst. During polymerization, hydrogen may be added to adjust the molecular weight, if necessary. By adjusting the molecular weight of the propylene polymer or ethylene/propylene copolymer, the MFR of the polypropylene-based resin (A) and thus the MFR of the polypropylene-based resin composition can be adjusted.

Before the polymerization in the first stage polymerization reactor, propylene may be prepolymerized in order to form polymer chains in the solid catalyst component that will serve as a foothold for the subsequent main polymerization. Prepolymerization is usually carried out at a temperature of 40 °C or below, preferably 30 °C or below, more preferably 20 °C or below.

As a catalyst, a known olefin polymerization catalyst can be used.

As a catalyst for polymerizing ethylene monomer and propylene monomer in the presence of the propylene polymer, a stereospecific Ziegler-Natta catalyst is preferable, and a catalyst comprising the following component (a), component (b), and component (c) (hereinafter also referred to as "catalyst (X)") is particularly preferred;

(a) a solid catalyst containing magnesium, titanium, halogen, and a phthalate-based compound as an electron donor compound as essential components.
(b) an organoaluminum compound.
(c) an organosilicon compound as an external electron donor compound.

It is preferable that the polypropylene-based resin (A) is produced in the method having a step of polymerizing ethylene monomer and α-olefin monomer (for example, a propylene monomer) using a catalyst (X) in the presence of the propylene polymer to obtain the polypropylene-based resin. By using the catalyst (X), a polypropylene-based resin (A) having each physical property within the above range can be easily obtained.

It is to be noted that the molecular weight and stereoregularity distribution of the resulting propylene polymer differ depending on the catalyst used (especially for the electron donor compound of (a)), and these differences affect crystallization behavior, etc., but the relationship between them in details have not been revealed. In order to clarify this, it is necessary to analyze both the molecular weight distribution and the stereoregularity distribution as the molecular structure, but this is complicated because components with different molecular weights and stereoregularities influence each other during the crystallization process, which makes interpretation of the influence of molecular weight and stereoregularity distribution on crystallization behavior more difficult. Furthermore, since actual sheet molding is carried out in a fluidized state of molten resin, it is not easy to understand the phenomenon even if advanced analytical techniques are used. Therefore, in a polypropylene-based resin composition obtained using a certain catalyst, it is almost impossible to specify the difference in crystallization behavior due to the distribution of molecular weight or stereoregularity numerically or in any other manner. The molecular weight distribution and stereoregularity distribution change not only by the type of catalyst mentioned above but also by thermal deterioration during melting and kneading, peroxide treatment, and the like.

Component (a) is prepared using, for example, a titanium compound, a magnesium compound, and an electron donor compound.

As the titanium compound used in component (a), a tetravalent titanium compound represented by the general formula: $Ti(OR)_gX_{4-g}$ (R is a hydrocarbon group, X is a halogen, $0 \leq g \leq 4$) is suitable.

Examples of the hydrocarbon group include methyl, ethyl, propyl, butyl, etc., and examples of the halogen include Cl, Br, etc.

More specific titanium compounds include titanium tetrahalides such as $TiCl_4$, $TiBr_4$, $TiI_4$; trihalogenated alkoxytitanium such as $Ti(OCH_3)Cl_3$, $Ti(OC_2H_5)Cl_3$, $Ti(O_n\text{-}C_4H_9)Cl_3$, $Ti(OC_2H_5)Br_3$, $Ti(O\text{-}isoC_4H_9)Br_3$; dihalogenated alkoxytitanium such as $Ti(OCH_3)_2Cl_2$, $Ti(OC_2H_5)_2Cl_2$, $Ti(O_n\text{-}C_4H_9)_2Cl_2$, $Ti(OC_2H_5)_2Br_2$; monohalogenated trialkoxytitanium such as $Ti(OCH_3)_3Cl$, $Ti(OC_2H_5)_3Cl$, $Ti(O_n\text{-}C_4H_9)_3Cl$, $Ti(OC_2H_5)_3Br$; tetraalkoxytitanium such as $Ti(OCH_3)_4$, $Ti(OC_2H_5)_4$, $Ti(O_n\text{-}C_4H_9)_4$. These titanium compounds may be used alone or in combination of two or more types.

Among the above titanium compounds, preferred are halogen-containing titanium compounds, more preferred are titanium tetrahalides, and particularly preferred are titanium tetrachloride ($TiCl_4$).

Magnesium compounds used in component (a) include magnesium compounds having a magnesium-carbon bond or a magnesium-hydrogen bond, such as dimethylmagnesium, diethylmagnesium, dipropylmagnesium, dibutylmagnesium, diamylmagnesium, dihexylmagnesium, didecylmagnesium, ethylmagnesium chloride, propylmagnesium chloride, butylmagnesium chloride, hexylmagnesium chloride, amylmagnesium chloride, butyl ethoxymagnesium, ethylbutylmagnesium, butylmagnesium hydride, and the like. These magnesium compounds can also be used in the form of a complex compound with, for example, organoaluminium, and may be in a liquid or solid state. Further suitable magnesium compounds include magnesium halides such as magnesium chloride, magnesium bromide, magnesium iodide, magnesium fluoride; alkoxymagnesium halides such as magnesium methoxychloride, ethoxymagnesium chloride, isopropoxymagnesium chloride, butoxymagnesium chloride, octoxymagnesium chloride; allyloxymagnesium halide such as phenoxymagnesium chloride, methylphenoxymagnesium chloride; alkoxymagnesium such as ethoxymagnesium, isopropoxymagnesium, butoxymagnesium, n-octoxymagnesium, 2-ethylhexoxymagnesium; dialkoxymagnesium such as dimethoxymagnesium, diethoxymagnesium, dipropoxymagnesium, dibutoxymagnesium, and ethoxymethoxymagnesium; allyloxymagnesium such as ethoxypropoxymagnesium, butoxyethoxymagnesium, phenoxymagnesium, and dimethylphenoxymagnesium. These magnesium compounds may be used alone or in combination of two or more types.

The electron donor compound used for component (a) preferably contains a phthalate-based compound as an essential component. When the catalyst (X) containing a phthalate-based compound as an electron donor is used, a polypropylene-based resin having a propylene polymer $M_w/M_n$ within the above range can be easily obtained. Additionally, when an ethylene/$\alpha$-olefin copolymer is polymerized using a Ziegler-Natta catalyst, generally, components with different contents of ethylene-derived units are produced (so-called compositional distribution exists), while catalyst (X) having phthalate-based compound as an electron donor compound is used a copolymer with a wide composition distribution can be obtained. It is considered that, as a result, both components are easily produced one of which having a particularly high content of ethylene-derived units effective for the impact resistance at low temperatures compared to the average value of the copolymer, and another having particularly low content of ethylene-derived units effective for interfacial affinity with the propylene polymer compared to the average value of the copolymer. As a result, by using a catalyst (X) containing a phthalate-based compound as an electron donor, even when an ethylene/$\alpha$-olefin copolymer with a relatively high content of ethylene-derived units are used to improve the impact resistance at extremely low temperatures are polymerized, the affinity of the interface with the propylene polymer is maintained, making it possible to maintain a balance between rigidity and impact resistance.

Examples of phthalate-based compounds include monoethyl phthalate, dimethyl phthalate, methyl ethyl phthalate, mono-isobutyl phthalate, mono-normal butyl phthalate, diethyl phthalate, ethyl isobutyl phthalate, ethyl normal butyl phthalate, di-n-propyl phthalate, diisopropyl phthalate, di-n-butyl phthalate, diisobutyl phthalate, di-n-heptyl phthalate, di-2-ethylhexyl phthalate, di-n-octyl phthalate, dineopentyl phthalate, didecyl phthalate, benzyl butyl phthalate, and diphenyl phthalate. Among them, diisobutyl phthalate is particularly preferred.

Examples of electron donor compounds in the solid catalyst other than phthalate-based compounds include succinate-based compounds and diether-based compounds.

The succinate-based compound may be an ester of succinic acid, or an ester of substituted succinic acid having a substituent such as an alkyl group at the 1st or 2nd position of the succinic acid. Specific examples include diethyl succinate, dibutyl succinate, diethyl methyl succinate, diethyl diisopropyl succinate, diallylethyl succinate, and the like.

Examples of diether-based compounds include 1,3-diether, such as 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(p-fluorophenyl)-1,3-dimethoxypropane, 2-(1-decahydronaphthyl)-1,3-dimethoxypropane, 2-(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-propyl-2-pentyl-1,3-diethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane, 2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimethoxypropane, 2,2-di-sec-butyl-1,3-dimethoxypropane, 2,2-di-tert-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, etc. Further specific examples of 1,3-diether-based compounds include the following. 1,1-bis(methoxymethyl)-cyclopentadiene; 1,1-bis(methoxymethyl)-2,3,4,5-tetramethylcyclopentadiene; 1,1-bis(methoxymethyl)-2,3,4,5-tetraphenylcyclopentadiene; 1,1-bis(methoxymethyl)-2,3,4,5-tetrafluorocyclopentadiene; 1,1-bis(methoxymethyl)-3,4-dicyclopentylcyclopentadiene; 1,1-bis(methoxymethyl)indene; 1,1-bis(methoxymethyl)-2,3-dimethylindene; 1,1-bis(methoxymethyl)-4,5,6,7-tetrahydroindene; 1,1-bis(methoxymethyl)-2,3,6,7-tetrafluoroindene; 1,1-bis(methoxymethyl)-4,7-dimethylindene; 1,1-bis(methoxymethyl)-3,6-dimethylindene; 1,1-bis(methoxymethyl)-4-phenylindene; 1,1-bis(methoxymethyl)-4-phenyl-2-methylindene; 1,1-bis(methoxymethyl)-4-cyclohexylindene; 1,1-bis(methoxymethyl)-7-(3,3,3-trifluoropropyl)indene; 1,1-bis(methoxymethyl)-7-trimethylsilylindene; 1,1-bis(methoxymethyl)-7-trifluoromethylindene; 1,1-bis(methoxymethyl)-4,7-dimethyl-4,5,6,7-tetrahydroindene; 1,1-bis(methoxymethyl)-7-methylindene; 1,1-bis(methoxymethyl)-7-cyclopentylindene; 1,1-bis(methoxymethyl)-7-isopropylindene; 1,1-bis(methoxymethyl)-7-cyclohexylindene; 1,1-bis(methoxymethyl)-7-tert-butylindene; 1,1-bis(methoxymethyl)-7-tert-butyl-2-methylindene; 1,1-bis(methoxymethyl)-7-phenylindene; 1,1-bis(methoxymethyl)-2-phenylindene; 1,1-bis(methoxymethyl)-1H-benzindene; 1,1-bis(methoxymethyl)-1H-2-methylbenzindene; 9,9-bis(methoxymethyl)fluorene; 9,9-bis(methoxymethyl)-2,3,6,7-tetramethylfluorene; 9,9-bis(methoxymethyl)-2,3,4,5,6,7-hexafluorofluorene; 9,9-bis(methoxymethyl)-2,3-benzofluorene; 9,9-bis(methoxymethyl)-2,3,6,7-dibenzofluorene; 9,9-bis(methoxymethyl)-2,7-diisopropylfluorene; 9,9-bis(methoxymethyl)-1,8-dichlorofluorene; 9,9-bis(methoxymethyl)-2,7-dicyclopentylfluorene; 9,9-bis(methoxymethyl)-1,8-difluorofluorene; 9,9-bis(methoxymethyl)-1,2,3,4-tetrahydrofluorene; 9,9-bis(methoxymethyl)-1,2,3,4,5,6,7,8-octahydrofluorene; 9,9-bis(methoxymethyl)-4-tert-butylfluorene.

Examples of the halogen atom constituting component (a) include fluorine, chlorine, bromine, iodine, or a mixture thereof, and chlorine being particularly preferred.

Examples of the organoaluminum compound of component (b) include trialkylaluminum such as triethylaluminum and tributylaluminium, trialkenylaluminum such as triisoprenylaluminum, dialkylaluminum alkoxide such as diethylaluminum ethoxide and dibutylaluminum butoxide, alkylaluminum sesquialkoxide such as ethylaluminum sesquiethoxide, butylaluminum sesquibutoxide, partially alkoxylated alkyl aluminum having the average composition of $R^1_{2.5}Al(OR^2)_{0.5}$ ($R^1$ and $R^2$ are hydrocarbon groups which may be different or the same, respectively), dialkylaluminum halogenides such as diethylaluminum chloride, dibutylaluminum chloride, diethylaluminum bromide, alkylaluminum sesquihalogenides such as ethyl aluminum sesquichloride, butyl aluminum sesquichloride, ethyl aluminum sesquibromide, partially halogenated alkylaluminum, such as alkylaluminum dihalogenide, for example ethylaluminum dichloride, propylaluminum dichloride, butylaluminum dibromide, partially hydrogenated alkylaluminum such as dialkylaluminum hydride like diethylaluminum hydride, dibutylaluminum hydride, alkylaluminum dihydride like ethyl aluminum dihydride, propyl aluminum dihydride, partially alkoxylated and halogenated alkyl aluminums such as ethyl aluminum ethoxy chloride, butyl aluminum butoxy chloride, ethyl aluminum ethoxy bromide. The above component (b) may be used alone or in combination of two or more types.

As an external electron donor compound of component (c), an organosilicon compound is used.

Preferred organosilicon compounds include, for example, trimethylmethoxysilane, trimethylethoxysilane, dimethyldimethoxysilane, dimethyldiethoxysilane, diisopropyldimethoxysilane, t-butylmethyldimethoxysilane, t-butylmethyldiethoxysilane, t-amylmethyldiethoxy silane, diphenyldimethoxysilane, phenylmethyldimethoxysilane, diphenyldiethoxysilane, bis o-tolyldimethoxysilane, bis m-tolyldimethoxysilane, bis p-tolyl dimethoxysilane, bis p-tolyl diethoxysilane, bis ethylphenyl dimethoxysilane, dicyclopentyldimethoxysilane, dicyclohexyldimethoxysilane, cyclohexylmethyldimethoxysilane, cyclohexylmethyldiethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, $\gamma$-chloropropyltrimethoxysilane, methyltriethoxysilane, vinyltriethoxysilane, t-butyltriethoxysilane, thexyltrimethoxysilane, n-butyltriethoxysilane, iso-butyltriethoxysilane, phenyltriethoxysilane, $\gamma$-aminopropyltriethoxysilane, chlortriethoxysilane, ethyltriisopropoxysilane, vinyltributoxysilane, cyclohexyltrimethoxysilane, cyclohexyltriethoxysilane, 2-norbornane trimethoxysilane, 2-norbornane triethoxysilane, 2-norbornane methyldimethoxysilane, ethyl silicate, butyl silicate, trimeth-ylphenoxysilane, methyltriallyloxysilane, vinyltris ($\beta$-methoxyethoxysilane), vinyltriacetoxy silane, dimethyltetraethoxy-disiloxane, methyl(3,3,3-trifluoro-n-propyl)dimethoxysilane, cyclohexylethyldimethoxysilane, cyclopentyl-t-butoxydimethoxysilane, diisobutyldimethoxysilane, isobutylisopropyldimethoxysilane, n-propyltrimethoxysilane, di-n-propyldimethoxysilane, t-butylethyldimethoxysilane, t-butylpropyldimethoxysilane, t-butyl-t-butoxydimethoxysilane, isobutyltrimethoxysilane, cyclohexylisobutyldimethoxysilane, di-sec-butyldimethoxysilane, isobutylmethyldimethoxysilane, bis(decahydroisoquinolin-2-yl)dimethoxysilane, diethylaminotriethoxysilane, dicyclopentyl-bis(ethylamino)silane, tetraethoxysilane, tetramethoxysilane, isobutyltriethoxysilane, t-butyltrimethoxysilane, i-butyltrimethoxysilane, i-butylsec-butyldimethoxysilane, ethyl(perhydroisoquinolin-2-yl)dimethoxysilane, tri(isopropenyloxy)phenylsilane, i-butyl i-propyl dimethoxysilane, cyclohexyl i-butyldimethoxysilane, cyclopentyl i-butyldimethoxysilane, cyclopentylisopropyldimethoxysilane, phenyltriethoxylane, p-tolylmethyldimethoxysilane, and the like.

Among these, ethyltriethoxysilane, n-propyltriethoxysilane, n-propyltrimethoxysilane, t-butyltriethoxysilane, t-butylmethyldimethoxysilane, t-butylmethyldiethoxysilane, t-butylethyldimethoxy silane, t-butylpropyldimethoxysilane, t-butyl t-butoxydimethoxysilane, t-butyltrimethoxysilane, i-butyltrimethoxysilane, isobutylmethyldimethoxysilane, i-butylsec-butyldimethoxysilane, ethyl (perhydroisoquinoline 2-yl) dimethoxysilane, bis(decahydroisoquinolin-2-yl)dimethoxysilane, tri(isopropenyloxy)phenylsilane, thexyltrimethoxysilane, vinyltriethoxysilane, phenyltriethoxysilane, phenyltrimethoxysilane, vinyltributoxysilane, diphenyldimethoxysilane, diisopropyldimethoxysilane, diisobutyldimethoxysilane, i-butyl i-propyldimethoxysilane, cyclopentyl t-butoxydimethoxysilane, dicyclopentyldimethoxysilane, cyclohexylmethyldimethoxysilane, cyclohexyl i-butyldimethoxysilane, cyclopentyl i-butyldimethoxysilane, cyclopentylisopropyldimethoxysilane, di-sec-butyldimethoxysilane, diethylaminotriethoxysilane, tetraethoxysilane, tetramethoxysilane, isobutyltriethoxysilane, phenylmethyldimethoxysilane, phenyltriethoxylane, bis p-tolyldimethoxysilane, p-tolylmethyldimethoxysilane, dicyclohexyldimethoxysilane, cyclohexylethyldimethoxysilane, 2-norbornanetri ethoxysi lane, 2-norbornanemethyldimethoxysilane, diphenyldiethoxysilane, methyl(3,3,3-trifluoro-n-propyl)dimethoxysilane, ethyl silicate, and the like are preferred. The above component (c) may be used alone or in combination of two or more types.

Organosilicon compounds play an important role, especially in adjusting the amount of xylene-insoluble portion. When other catalyst components are same, the amount of xylene-insoluble portion depends on the type and amount of the organosilicon compound as well as the polymerization temperature, but even when an appropriate organosilicon compound is used, it decreases significantly when the amount of the organosilicon compound is below a certain value usually except diether catalyst. Therefore, when the polymerization temperature is 75 °C, the lower limit of the molar ratio of the organosilicon compound and the organoaluminum compound (organosilicon compound/organoaluminum) is preferably 0.015, more preferably 0.018. The upper limit of the ratio is preferably 0.30, more preferably 0.20, and even more preferably 0.10. That is, the examples include the ranges of 0.015 to 0.30, 0.015 to 0.20, 0.015 to 0.10, 0.018 to 0.30, 0.018 to 0.20, and 0.018 to 0.10.

When using a phthalate-based compound as an internal electron donor compound, elevated polymerization temperature leads to the increase of xylene-insoluble portion, and thus the lower limit and the upper limit of the preferred molar ratio of the organosilicon compound and the organoaluminum compound (organosilicon compound/organoaluminum) are lowered. Specifically, the lower limit of said molar ratio in the case of polymerization at 80 °C using a phthalate-based compound is preferably 0.010, more preferably 0.015, and even more preferably 0.018. The upper limit of said molar ratio is preferably 0.20, more preferably 0.14, and even more preferably 0.08. That is, the examples include the ranges of 0.010 to 0.20, 0.010 to 0.14, 0.010 to 0.08, 0.015 to 0.20, 0.015 to 0.14, 0.015 to 0.08, 0.018 to 0.20, 0.018 to 0.14, and 0.018 to 0.08.

As catalyst (X), it is preferred that the component (b) is a trialkylaluminum such as triethylaluminum, triisobutylaluminum, and the component (c) is an organosilicon compound such as dicyclopentyldimethoxysilane, cyclohexylmethyldimethoxysilane, diisopropyldimethoxysilane.

The method for obtaining the polymerization mixture by the multistage polymerization method is not limited to the above, and the propylene polymer (component (a1)) may be polymerized in multiple polymerization reactors, or the ethylene/$\alpha$-olefin copolymer (component (a2)) may be polymerized in a plurality of polymerization reactors.

As a method for obtaining the polymerization mixture, there is also a method using a polymerization vessel having a gradient of monomer concentration or polymerization conditions. In such polymerization vessel, for example, one in which at least two polymerization regions are joined can be used, and monomers can be polymerized by gas phase polymerization.

Specifically, in the presence of a catalyst, monomers are supplied and polymerized in a polymerization region consisting of a riser pipe, monomers are supplied and polymerized in a downcomer pipe connected to the riser pipe, and the polymerization is carried out between the riser pipe and the downcomer pipe while circulating, and the polymerization product is collected. The method includes means for completely or partially preventing the gas mixture present in the riser pipe from entering the downcomer pipe. Also, a gas and/or liquid mixture having a different composition from the gas mixture present in the riser pipe is introduced into the downcomer pipe. For this polymerization method, the method described in Japanese

Patent Publication No. 2002-520426 can be applied, for example.

<Sheet molding>

The sheet molding of the present invention is formed by molding the polypropylene-based resin composition of the present invention. FIG. 1 shows a roll of sheet molding 10 as an example of the present invention.

The sheet molding of the present invention can be produced, for example, by a cast molding method.

It is effected at the molding temperature of, for example, 150 to 350 °C, preferably 170 to 250 °C.

The thickness of the sheet molding of the present invention can be, for example, more than 0.1 mm to 2.0 mm, preferably more than 0.1 mm to 1.0 mm, more preferably more than 0.1 mm to 0.5 mm, and even more preferably more than 0.1 mm to 0.4 mm.

The thickness of the sheet molding is measured using a known measuring method such as a beta-ray film thickness meter.

Since the sheet molding of the present invention has excellent low-temperature impact resistance, it can be used in a low-temperature environment of, for example, -50°C to -10°C, preferably -45°C to -20°C, more preferably -40°C to -30°C.

The high rate impact (unit: J) of the sheet molding of the present invention at -40°C is preferably over 20 (>20) when measured by the test method described below, and the higher, the more preferable.

The "sheet peeling" of the sheet molding of the present invention is preferably "O" or higher, which will be described later.

The rigidity (stiffness) of the sheet molding of the present invention is preferably 500 MPa or more, more preferably 700 MPa or more, even more preferably 900 MPa or more, and the higher the stiffness, the more preferable. Here, the stiffness is a value measured by the test method described below.

[Examples of embodiment]

Examples and comparative examples are shown below, but the present invention is not limited to the following examples.

<Preparation of Copolymer 1>

A solid catalyst in which $TiCl_4$ and diisobutyl phthalate as an internal donor were supported on $MgCl_2$ was prepared by the method described in Example 5, lines 46 to 53 of European Patent No. 728769. Specifically, it was performed as follows.

Microprolate $MgCl_2.2.1C_2H_5OH$ was produced as follows. In a 2L autoclave equipped with a turbine stirrer and a suction pipe, 48 g of anhydrous $MgCl_2$, 77 g of anhydrous $C_2H_5OH$, and 830 mL of kerosene were placed in an inert gas at room temperature. Heating the contents to 120 °C with stirring resulted an adduct of $MgCl_2$ and alcohol, which was melted and mixed with the dispersant. The nitrogen pressure inside the autoclave was maintained at 15 atmospheres. The suction pipe of the autoclave was externally heated to 120 °C using a heating jacket. The suction pipe had an inner diameter of 1 mm and a length of 3 m from one end of the heating jacket to the other. The mixture was flowed through this pipe at a speed of 7 m/sec. At the outlet of the pipe, the dispersion was collected with stirring into a 5 L flask containing 2.5 L of kerosene and externally cooled with a jacket that maintained the initial temperature at -40 °C. The final temperature of the dispersion was 0 °C. The spherical solid product constituting the dispersed phase of the emulsion was allowed to settle out, separated by filtration, washed with heptane and dried. All these operations were performed in an inert gas atmosphere. $MgCl_2.3C_2H_5OH$ in the form of solid spherical particles with a maximum diameter of 50 μm or less was obtained. Yield was 130g. The product thus obtained was freed of alcohol by gradually increasing the temperature from 50 °C to 100 °C in a stream of nitrogen until the alcohol content per mole of $MgCl_2$ was reduced to 2.1 mol.

A 500 mL cylindrical glass reactor equipped with a filtration barrier was charged with 225 mL of $TiCl_4$ at 0 °C, and 10.1 g (54 mmol) of the microspheroidal $MgCl_2.2.1C_2H_5OH$ obtained as above was added for 15 minutes while the contents were stirred. Thereafter, the temperature was raised to 40 °C and 9 mmol of diisobutyl phthalate was added. The temperature was raised to 100 °C over 1 hour and stirring was continued for an additional 2 hours. $TiCl_4$ was then removed by filtration and 200 mL of $TiCl_4$ was added with stirring at 120 °C for an additional hour. Finally, the contents were filtered and washed with n-heptane at 60 °C until the filtrate was completely free of chloride ions. The catalyst component thus obtained contained 3.3 % by weight of Ti and 8.2% by weight of diisobutyl phthalate.

Then using above solid catalyst, triethylaluminum (TEAL) as an organoaluminum compound, and dicyclopentyldimethoxysilane (DCPMS) as an external electron donor compound, contacting was carried out at 12 °C for 24 minutes in the amount such that the weight ratio of TEAL to the solid catalyst was 20, and the weight ratio of TEAUDCPMS was 10 (0.05 when converted to the above-mentioned organosilicon compound/organoaluminium molar ratio) to obtain catalyst (X).

Prepolymerization was carried out by holding thus obtained catalyst (X) in a suspended state at 20 °C for 5 minutes in liquid propylene.

The obtained prepolymerized product was introduced into the first stage polymerization reactor of a polymerization apparatus equipped with two stages of polymerization reactors in series, and propylene was supplied to produce a propylene homopolymer. Subsequently, propylene homopolymer, propylene, and ethylene were supplied to the second stage polymerization reactor to produce an ethylene/propylene copolymer. During the polymerization, temperature and pressure were adjusted and hydrogen was used as a molecular weight regulator.

The polymerization temperature and the ratio of reactants were as follows: In the first reactor, the polymerization temperature and hydrogen concentration were 80 °C and 0.012 mol%, respectively, and in the second reactor, the polymerization temperature, hydrogen concentration, and the ratio of ethylene to the total of ethylene and propylene were 80 °C, 1.06 mol %, and 0.49 mol ratio, respectively. Furthermore, the residence time distributions of the first and second stages were adjusted so that the amount of ethylene/propylene copolymer was 35 % by weight. By above method, the targeted copolymer 1 was obtained.

The obtained copolymer 1 was a polymerized mixture of component (a1), which was a propylene polymer constituting the continuous phase, and component (a2), which was an ethylene/propylene copolymer constituting the rubber phase, and was a polypropylene-based resin (A).

For copolymer 1, molecular weight distribution Mw/Mn of component (a1), ethylene-derived unit content of component (a1), average pore diameter (Dn) of component (a1), weight ratio component (a2)/[component (a1) + component (a2)], ethylene-derived unit content of component (a2), the XSIV of component (a1) + component (a2), and the MFR of component (a1) + component (a2) are shown in Table 1.

In Table 1, the catalyst (X) containing a phthalate-based compound as component (a) is represented as "Pht", and the catalyst (X) containing a succinate-based compound as component (a) is represented as "Suc". The catalyst (X) obtained by the above method is indicated as "Pht-1" in Table 1.

<Preparation of copolymers 2 to 3>

The ratio of ethylene to the total of ethylene and propylene in the second reactor was changed so that the content of ethylene-derived units in component (a2) was as shown in Table 1. Other than that, Copolymers 2 to 3 were obtained using the same manufacturing method as in the case of Copolymer 1.

<Preparation of copolymer r1>

A solid catalyst in which Ti and diisobutyl phthalate as an internal donor were supported on $MgCl_2$ was prepared by the method described in paragraph 0032, lines 21 to 36 of JP-A-2004-27218. Specifically, it was performed as follows.

Under a nitrogen atmosphere at 120 °C, 56.8 g of anhydrous magnesium chloride was completely dissolved in 100 g of absolute ethanol, 500 mL of vaseline oil "CP15N" manufactured by Idemitsu Kosan Co., Ltd., and 500 mL of silicone oil "KF96" manufactured by Shin-Etsu Silicone Co., Ltd. This solution was stirred for 2 minutes at 120 °C and 5000 rpm using a TK homomixer manufactured by Tokushu Kika Kogyo Co., Ltd. While maintaining stirring, it was poured into 2 L of anhydrous heptane without exceeding 0 °C. The obtained white solid was thoroughly washed with anhydrous heptane, dried under vacuum at room temperature, and further partially deethanolized under a nitrogen stream to obtain 30 g of a spherical solid of $MgCl_2.1.2C_2H_5OH$.

30 g of above spherical solid was suspended in 200 mL of anhydrous heptane. While stirring at 0 °C, 500 mL of titanium tetrachloride was added dropwise over 1 hour. Next, when heating started and the temperature reached 40 °C, 4.96 g of diisobutyl phthalate was added, and the temperature was raised to 100 °C in about 1 hour. After the reaction at 100 °C for 2 hours, a solid portion was collected by hot filtration. Thereafter, 500 mL of titanium tetrachloride was added to the reaction mixture and stirred, followed by reaction at 120 °C for 1 hour. After the reaction was completed, the solid portion was collected again by hot filtration and washed seven times with 1.0 L of hexane at 60 °C, and three times with 1.0 L of hexane at room temperature to obtain a solid catalyst. The titanium content in the obtained solid catalyst component was measured and found to be 2.36% by weight.

Using the above solid catalyst, the residence time distribution in the first and second stages was changed so that the weight ratio of component (a2)/[component (a1) + component (a2)] was as shown in Table 1. Other than that, copolymer r1 was obtained by the same manufacturing method as in the case of copolymer 1.

The catalyst (X) obtained here after contact with TEAL and DCPMS is indicated as "Pht-2" in Table 1.

<Preparation of copolymers r2-r3>

The ratio of ethylene to the total of ethylene and propylene in the second stage reactor was changed so that the content of ethylene-derived units in component (a2) was as shown in Table 1. Other than that, Copolymer r2 was obtained in the same manner as in the case of Copolymer 1. Regarding Copolymer r3, the target copolymer could not be obtained because the content of ethylene-derived units in component (a2) was high and production was difficult (the values in Table 1 except for ΔHc above are the target values). )

<Preparation of copolymers r4-r5>

The hydrogen concentration in the second stage reactor was changed so that the XSIV of component (a1) + component (a2) was the value listed in Table 1, and also the hydrogen concentration in the first stage was adjusted in order to adjust the MFR of component (a1) + component (a2) was the value listed in Table 1. Copolymers r4-r5 were obtained in the same manner as in the case of Copolymer 1 except for the above.

<Preparation of copolymer r6>

The hydrogen concentration in the first stage was adjusted in order to change the MFR of component (a1) + component (a2) to the value shown in Table 1. Other than that, copolymer r6 was obtained using the same manufacturing method as in the case of copolymer 1.

<Preparation of Copolymer 4>

A solid catalyst was prepared in accordance with the preparation method described in Examples of Japanese Patent Application Publication No. 2011-500907 using the following procedure.

Into a 500 mL four-necked round bottom flask purged with nitrogen, 250 mL of $TiCl_4$ was introduced at 0 °C. With stirring, 10.0 g of microspheroidal $MgCl_2.1.8C_2H_5OH$ (prepared according to the method described in Example 2 of USP-4,399,054, but operatedat 3000 rpm instead of 10000 rpm), and 9 .1 mmol of diethyl-2,3-(diisopropyl)succinate were added. The temperature was raised to 100 °C and held for 120 minutes. Then, stirring was stopped, the solid product was allowed to settle, and the supernatant liquid was suctioned. The following operation was then repeated twice: 250 mL of fresh $TiCl_4$ was added, the mixture was allowed to react at 120 °C for 60 minutes, and the supernatant liquid was suctioned. The solid was washed six times with anhydrous hexane (6 × 100 mL) at 60 °C.

The solid catalyst, TEAL and DCPMS were brought into contact with each other at room temperature for 5 minutes in such amount that the weight ratio of TEAL to the solid catalyst was 18 and the weight ratio of TEAUDCPMS was 10. Prepolymerization was carried out by holding the obtained catalyst (X) in a suspended state at 20 °C for 5 minutes in liquid propylene.

The obtained prepolymerized product was introduced into the first stage polymerization reactor of a polymerization apparatus equipped with two stages of polymerization reactors in series, and propylene was supplied to produce a propylene homopolymer. Subsequently, propylene homopolymer, propylene, and ethylene were supplied to the second stage polymerization reactor to produce an ethylene/propylene copolymer. During the polymerization, temperature and pressure were adjusted and hydrogen was used as a molecular weight regulator.

The polymerization temperature and the ratio of reactants were as follows: In the first reactor, the polymerization temperature and hydrogen concentration were 80 °C and 0.030 mol%, respectively, and in the second reactor, the polymerization temperature, hydrogen concentration, and the ratio of ethylene to the total of ethylene and propylene were 80 °C, 1.06 mol %, and 0.44 mol ratio, respectively. Furthermore, the residence time distributions of the first and second stages were adjusted so that the weight ratio component (a2)/[component (a1) + component (a2)] was 35 % by weight. By the above method, the copolymer 4 shown in Table 1 was obtained.

Copolymers 2 to 4, r1-r6 thus obtained were measured in the same manner as for Copolymer 1, and the results are shown in Table 1.

[Table 1]

| Type | Copolymer 1 | Copolymer 2 | Copolymer 3 | Copolymer r1 | Copolymer r2 | Copolymer r3 | Copolymer r4 | Copolymer r5 | Copolymer r6 | Copolymer 4 |
|---|---|---|---|---|---|---|---|---|---|---|
| Catalyst | Pht-1 | Pht-1 | Pht-1 | Pht-2 | Pht-1 | Pht-1 | Pht-1 | Pht-1 | Pht-1 | Suc |
| Molecular weight distribution of component (a1) Mw/Mn | 6 | 6 | 6 | 6 | 6 | 6 | 6 | 6 | 6 | 9 |
| Content of ethylene-derived unit of component (a1) (weight %) | 0 | 0 | 0 | 0 | 0 | 0 | 0 | 0 | 0 | 0 |
| Average pore diameter (Dn) of component (a1)(μm) | 9.4 | 9.4 | 9.4 | 7.0 | 9.4 | 9.4 | 9.4 | 9.4 | 9.4 | 7.0 |
| Type of component (a2) | C2C3 | C2C3 | C2C3 | C2C3 | C2C3 | C2C3 | C2C3 | C2C3 | C2C3 | C2C3 |
| Weight ratio component (a2)/ [component (a1) + component (a2)] (weight %) | 35 | 35 | 35 | 25 | 35 | 35 | 35 | 35 | 35 | 35 |
| Content of ethylene-derived unit of component (a2) (weight %) | 50 | 29 | 80 | 50 | 23 | 88 | 50 | 50 | 50 | 50 |
| Calorific amount ΔHc of the crystallization peak between 85-105°C of DSC of component (A) (J/g) | 1.9 | 0.0 | 7.2 | 1.4 | 0.0 | - | 1.9 | 1.9 | 1.9 | 1.7 |
| XSIV of component (a1) + component (a2) (dl/g) | 3.2 | 3.2 | 3.2 | 3.2 | 3.2 | 3.2 | 2.3 | 5.9 | 3.2 | 3.2 |

| Type | Copolymer 1 | Copolymer 2 | Copolymer 3 | Copolymer r1 | Copolymer r2 | Copolymer r3 | Copolymer r4 | Copolymer r5 | Copolymer r6 | Copolymer 4 |
|---|---|---|---|---|---|---|---|---|---|---|
| MFR of component (a1) + component (a2) [230°C, 2.16kg] (g/10min) | 0.4 | 0.4 | 0.4 | 0.4 | 0.4 | 0.4 | 0.4 | 0.4 | 4.5 | 0.4 |

Each measurement value in Table 1 was measured by the following method.

<Mw/Mn of component (a1)>

A 2.5 g sample of component (a1) polymerized in the first stage reactor was used as the measurement sample, and the number average molecular weight (Mn) and weight average molecular weight (Mw) were measured, and the weight average molecular weight (Mw) was divided by the number average molecular weight (Mn) to determine the molecular weight distribution (Mw/Mn).

The device used was PL GPC220 manufactured by Polymer Laboratories, the mobile phase was 1,2,4-trichlorobenzene containing an antioxidant, and the columns were UT-G (1 column), UT-807 (1 column) and UT-806M (2 columns), manufactured by Showa Denko., connected in series, and a differential refractometer was used as a detector. In addition, the same solvent as the mobile phase was used as the solvent for the sample solution, and a measurement sample was prepared by dissolving for 2 hours under stirring at the temperature of 150 °C in a sample concentration of 1 mg/mL. 500 $\mu$L of the resulting sample solution was injected into the column, and measurement was performed at a flow rate of 1.0 mL/minute, a temperature of 145 °C, and a data collection interval of 1 second. The column was calibrated using cubic approximation using a polystyrene standard sample (Shodex STANDARD, manufactured by Showa Denko K.K.,) with a molecular weight of 5.8 million to 7.45 million. The Mark-Houwink-Sakurada coefficients of K = 1.21 $\times$ 10$^{-4}$, $\alpha$ = 0.707 for polystyrene standard samples, and K=1.37$\times$10$^{-4}$ and $\alpha$=0.75 for polypropylene homopolymers, propylene random copolymers, and polypropylene-based polymers were used.

<Average pore diameter of component (a1)>

A 2.5 g sample of component (a1) polymerized in the first stage reactor was used as a measurement sample, and a fully automatic pore distribution measuring device manufactured by Quanta Chrome, Pore Master 60-GT was used to measure the distribution of pore diameter D in the range of 1 $\mu$m to 100 $\mu$m by the mercury intrusion method specified in JIS R1655, and the average pore diameter Dn was calculated using the following formula.

$$Dn=\int(-dV/dlogD)dlogD/\int(1/D)(-dV/dlogD)dlogD$$

Here, V is the sample volume, which corresponds to the value obtained by subtracting the pore volume from the volume (bulk volume) of each particle.

<Total ethylene amount of copolymer, content of ethylene-derived units in component (a1)>

For copolymer samples dissolved in a mixed solvent of 1,2,4-trichlorobenzene/deuterated benzene, AVANCE III HD400 manufactured by Bruker ($^{13}$C resonance frequency 100 MHz) was used to obtain a $^{13}$C-NMR spectrum under the following conditions: measurement temperature 120 °C, flip angle 45 degrees, pulse interval 7 seconds, sample rotation speed 20 Hz, and number of integrations 5000 times.

Using the spectrum obtained above, the total ethylene content of the copolymer (weight %) was determined by the method described in the literature by Kakugo, Y. Naito, K. Mizunuma and T. Miyatake, Macromolecules, 15, 1150-1152 (1982).

In addition, when measuring component (a1) as a sample, the total ethylene amount (weight %) obtained by the above method is the ethylene unit content (weight %) of component (a1).

<Ethylene unit content in component (a2)>

The ethylene unit content (weight %) of component (a2) was determined by calculating in the same manner as the total ethylene amount, except that instead of the integrated intensity of T$\beta\beta$ obtained when measuring the total ethylene amount of the copolymer by the method described in the above literature, the integrated intensity T'$\beta\beta$ obtained by the following formula was used.

$$T'\beta\beta=0.98\times S\alpha\gamma\times A/(1-0.98\times A)$$

Here, A=S$\alpha\gamma$/(S$\alpha\gamma$+S$\alpha\delta$), which is calculated from S$\alpha\gamma$ and S$\alpha\delta$ described in the above literature.

<Weight ratio component (a2)/[component (a1)+component (a2)]>

It was determined by the following formula.

Component (a2)/[component (a1) + component (a2)] (unit: weight %) = total ethylene amount of copolymer/(ethylene unit content in component (a2) / 100)

<XSIV of component (a1) + component (a2)>

A xylene-soluble portion of the copolymer was obtained by the following method, and the intrinsic viscosity (XSIV) of the xylene-soluble portion was measured.
2.5 g of the copolymer sample was placed in a flask containing 250 mL of o-xylene (solvent), and stirred for 30 minutes using a hot plate and reflux device at 135 °C while purging with nitrogen to completely dissolve, and then cooled at 25 °C for 1 hour. The resulting solution was filtered using filter paper. 100 mL of the filtrate after filtration was collected, transferred to an aluminum cup and the like, and evaporated to dryness at 140 °C while purging with nitrogen, and left standing at room temperature for 30 minutes to obtain a xylene-soluble portion.
The intrinsic viscosity was measured in tetrahydronaphthalene at 135 °C using an automatic capillary viscosity measuring device (SS-780-H1, manufactured by Shibayama Scientific
Instruments Co., Ltd.).

<MFR of component (a1) + component (a2)>

0.05 g of H-BHT manufactured by Honshu Chemical Industry Co., Ltd., was added to 5 g of a sample of the copolymer, and after homogenization by dry blending, according to JIS K7210-1., measured in accordance with JIS K6921-2 at a temperature of 230 °C and a load of 2.16 kg.

<DSC of polypropylene-based resin (A)>

[Calorific value of crystallization peak ($\Delta$Hc) between 85 and 105 °C]

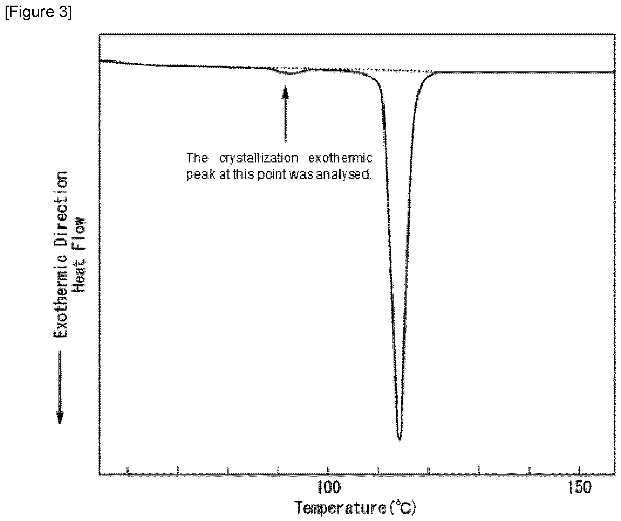

In order to normalize the influence of thermal history, approximately 5 mg was sampled directly from the pellet of polypropylene-based resin (A), which was each copolymer in Table 1, and after weighing with an electronic balance, differential scanning calorimetry (DSC) was performed using Q-200 manufactured by TA Instruments in accordance with ISO 11357-1 and ISO 11357-3. Specifically, the obtained sample was heated to 230 °C and held for 5 minutes, then cooled to 30 °C at a cooling rate of 5 °C/minute, and differential scanning calorimetry was performed during cooling. Among the exothermic peaks that indicate crystallization in this measurement result, the exothermic peak existing between 85 and 105 °C was compared to the baseline (virtual baseline described in ISO 11357-1:2016 (en) 3.7.3) and the exothermic peak. The calorific value $\Delta$Hc (J/g) of the crystallization peak was determined based on the area surrounded by the area. An example of the DSC chart used for analysis is shown in FIG. 3.

[Examples and Comparative Examples]

Components (A) was formulated according to the composition shown in Table 2, 12 or 15 parts by weight of component (B), 0.2 parts by weight of B225 manufactured by BASF as an antioxidant and 0.05 parts by weight of calcium stearate manufactured by Tannan Kagaku Kogyo Co., Ltd., as a neutralizing agent were added to total 88 or 85 parts by weight of the amount of component (A), and the mixture was stirred and mixed for 1 minute using a Henschel mixer. The mixture was melt-kneaded and extruded at a cylinder temperature of 230 °C using a co-directional twin-screw extruder TEX-30α manufactured by JSW Corporation. After cooling the strand in water, it was cut with a pelletizer to obtain pellets of the polypropylene-based resin composition.
The obtained pellets were subjected to a sheet molding machine described below to obtain a sheet molded body.
However, regarding Example 1-2 and Comparative Example 1-2, talc as component (C) was blended, to the total of 100 parts by weight of component (A) and component (B) contained in the above pellets, in the amount listed in Table 2 as a polyolefin masterbatch (talc content 50 wt%, temperature 230 °C, MFR at 2.16 kg load of 0.4 g/10 min), and then melt-kneaded to form a polypropylene-based resin composition pellets, which were subjected to a sheet molding machine described later to obtain a sheet molded body.
Various physical properties of the sheet molded bodies obtained in each example were evaluated.

[Table 2]

| Type | | Example 1-1 | Example 1-2 | Example 2 | Example 3 | Comparative example1-1 | Comparative example 1-2 | Comparative example 2 | Comparative example 3 | Comparative example δ | Comparative example 5 | Comparative example 6 | Example 4 |
|---|---|---|---|---|---|---|---|---|---|---|---|---|---|
| Component (A) | Type | Copolymer 1 | Copolymer 1 | Copolymer 2 | Copolymer 3 | Copolymer r1 | Copolymer r1 | Copolymer r2 | Copolymer r3 | Copolymer r4 | Copolymer r5 | Copolymer r6 | Copolymer 4 |
| | Weight ratio (parts by weight) | 85 | 88 | 85 | 85 | 85 | 88 | 85 | 85 | 85 | 85 | 85 | 85 |
| Component (B) | Type | HOPE | HDPE | HDPE | HDPE | HDPE | HOPE | HDPE | HDPE | HDPE | HDPE | HDPE | HDPE |
| | Weight ratio (parts by weight) | 15 | 12 | 15 | 15 | 15 | 12 | 15 | 15 | 15 | 15 | 15 | 15 |
| Component (C) | Type | None | Talc | None | None | None | Talc | None | None | None | None | None | None |
| | Weight ratio (parts by weight) | 0 | 25 | 0 | 0 | 0 | 25 | 0 | 0 | 0 | 0 | 0 | 0 |
| Master batch containing component (C) | Weight ratio (parts by weight) | 0 | 50 | 0 | 0 | 0 | 50 | 0 | 0 | 0 | 0 | 0 | 0 |
| MFR of polypropγrene-based resin composition [230°C, 2.16kg](g/10min) | | 0.4 | 0.4 | 0.4 | 0.4 | 0.4 | 0.4 | 0.4 | - | 0.4 | 0.4 | 3.4 | 0.4 |

(continued)

| Type | Example 1-1 | Example 1-2 | Example 2 | Example 3 | Comparative example1-1 | Comparative example 1-2 | Comparative example 2 | Comparative example 3 | Comparative example δ | Comparative example 5 | Comparative example 6 | Example 4 |
|---|---|---|---|---|---|---|---|---|---|---|---|---|
| PP factory productivity (i : Excellent ○: Good △: Fair X: Not possible) | ◎ | ◎ | ○ | ○ | ◎ | ◎ | △ | × | ◎ | △ | ◎ | △ |
| Rigidity: stiffness (MPa) | 640 | 1520 | 660 | 710 | - | 1800 | 660 | - | 690 | 930 | - | 690 |
| High-rate impact (J) @-40°C | >20 | >20 | >20 | >20 | - | <1 | 10 | - | 3 | 12 | - | >20 |
| Sheet peeling (◎ Excellent ○: Good △: FairX: Not acceptable) | ○ | ○ | ○ | ○ | × | Δ | ○ | - | ○ | ○ | ○ | ○ |
| Sheet moldability (○ : Good △ : Acceptable X: Not acceptable) | ○ | ○ | ○ | ○ | × | Δ | ○ | - | ○ | Δ | × | ○ |
| Sheet productivity (○ : Good △ : Acceptable X: Not possible) | ○ | ○ | ○ | ○ | × | △ | ○ | - | ○ | ○ | × | ○ |

Each component in Table 2 is as follows.

Component (A) is copolymers 1 to 4, copolymers r1-r6 in Table 1.

Component (B) is high-density polyethylene Novatec HB431 manufactured by Japan Polyethylene Co., Ltd. (density 957 kg/m$^3$, MFR of 0.35 g/10 min at a temperature of 190 °C and a load of 2.16 kg based on JIS K6922-2).

Component (C) is an inorganic filler, specifically the following talc;
Talc: Neotalc UNI05, manufactured by Neolite Kosan Co., Ltd., volume average particle diameter measured by laser diffraction method: 5 μm

Other ingredients are the following additives.

Antioxidant: B225 manufactured by BASF

Neutralizing agent: Calcium stearate manufactured by Tannan Chemical Industry Co., Ltd.

The measurement results and evaluation results in Table 2 are values measured and evaluated by the following method.

<PP factory productivity>

The ease of producing component (A) using the above method was evaluated on the following four scales.

"◎": Excellent = Manufactured without any problems.
"o": Good = Manufactured without problems.
"Δ": Fair = Barely able to produce, but production volume and/or fluff (powder) properties were slightly inferior.
"×": Not possible = A problem occurred during production and production could not be completed.

<Fluidity MFR>

The MFR of the polypropylene-based resin composition was measured in accordance with JIS K7210-1 and based on JIS K6921-2 under the conditions at a temperature of 230 °C and a load of 2.16 kg.

<Sheet moldability>

Using a 3-type, 3-layer, φ25 mm film/sheet molding device manufactured by Thermoplastics Industries Co., Ltd., the cylinder-to-die temperature was controlled at 250 °C, and the molten resin extruded from the die using the pellets as raw material was taken off while cooling and solidifying with a cooling roll at a molding speed of 1.0 m/min to obtain a sheet with a thickness of 400 μm.

The formed sheet was conditioned in a constant temperature room at 23 °C for 48 hours or more, and then used as a sample.

<Rigidity stiffness>

Based on JIS P8125, for a sample cut from sheet, a sheet-shaped piece with a measurement span length of 5 cm was bent at warp angle of 15° to measure the load using V-5 stiffness tester (Model 150-B) manufactured by Taber Instrument Corporation. Stiffness was determined from the observed load.

<High-rate impact>

Based on JIS K7211-2, a sample cut from sheet was hit at a constant velocity in the center of the surface of the test specimen by a striker hydraulically controlled in an atmosphere of -40 °C using a puncture impact tester (Hydroshot HITS-P10) manufactured by Shimadzu Corporation, and the puncture impact test energy was measured from the obtained impact force-displacement diagram.

<Sheet peeling>

A section with thickness of 20 μm was sliced out from the center of the obtained sheet in the direction perpendicular to the surface using a rotary microtome (model: RU-S) manufactured by Japan Microtome Research Institute Co., Ltd. Observation was made using a polarizing microscope (BX-50) manufactured by Olympus Corporation. The peeling state of the interface between propylene polymer (a1), copolymer of α-olefin (a2), ethylene/α-olefin polymer (B), inorganic filler (C) was evaluated in the following four stages.

"◎": Excellent: No peeling at all.
"O": Good: Slight peeling is observed.
"△": Fair: Peeling is partially observed.
"x": Not acceptable: Peeling is seen throughout.

<Sheet moldability>

The sheet obtained by the above molding method was evaluated on the following three scales.

"O": Good: A good product with no problems in shape, thickness, etc. was obtained.
"△": Acceptable: Some defective products were found.
"×": Not acceptable: Good product was not obtained.

<Sheet Productivity>

In carrying out the above sheet molding, the degree of sheet productivity due to the problem such as occurrence of breakage during molding was evaluated on the following three levels.

"O": Good: There were no problems and production was easy.
"△": Acceptable: A problem occurred and production was somewhat difficult.
"×": Not possible: A problem occurred and it was difficult to produce the sheet.

« Effects »

Since the sheets of the examples according to the present invention used a polypropylene-based resin composition having predetermined physical properties, they exhibited excellent impact resistance even at extremely low temperatures of -40 °C. In addition, each evaluation of rigidity (stiffness), sheet peeling, sheet moldability, and sheet productivity met the standards.

In order to improve the impact resistance at extremely low temperatures, the present inventors have intensively studied the formulation of the entire composition. In order to exhibit the rubbery properties of the polypropylene-based resin composition even at extremely low temperatures, it was considered that the content of component (a2) in component (A) or the content of ethylene-derived units in component (a2) may be increased. However, if these contents are increased carelessly, it becomes difficult to produce polypropylene-based resin (Comparative Example 3). In the present invention, we investigated a formulation that would provide sufficient rigidity within a manufacturable range. In addition, it is not enough to simply exhibit rubber properties; it also needs to be moldable into a sheet, so other parameters such as the XSIV value and MFR of component (a1) + component (a2) were adjusted, and thus the present invention was completed.

Comparative Example 1-1 had a low content of component (a2) and could not be formed into a sheet in the first place.

Comparative Example 1-2 was obtained by reducing the amount of component (B) in Comparative Example 1-1 and adding component (C). Although a sheet was barely formed with difficulty, the impact resistance at extremely low temperatures was not improved, and sheet peeling, sheet moldability, and sheet productivity were poor.

In Comparative Example 2, the content of ethylene-derived units in component (a2) was low, and the impact resistance at extremely low temperatures was poor, and although component (A) could be produced with difficulty, the production volume and fluff properties were poor.

In Comparative Example 3, the content of ethylene-derived units in component (a2) was high, and component (A) could not be produced.

Comparative Example 4 had poor impact resistance at extremely low temperatures due to the low XSIV of component (A).

In Comparative Example 5, the XSIV of component (A) was too high, so the impact resistance at extremely low temperatures was poor, and although component (A) could be manufactured with difficulty, the production amount was low. In addition, sheet moldability was poor. Comparative Example 6 had extremely poor sheet moldability (drawdown resistance) and sheet productivity due to the excessively high fluidity of component (A), and therefore any sheet sample was not obtained for evaluating the stiffness and impact resistance at extremely low temperatures.

**Claims**

1. A polypropylene-based resin composition comprising

a polypropylene-based resin (A) including a continuous phase consisting of a propylene polymer (a1) and a rubber phase consisting of a copolymer (a2) of ethylene and $\alpha$-olefin having 3 to 10 carbon atoms, and

an ethylene/$\alpha$-olefin polymer (B) which is a polymer of ethylene and $\alpha$-olefin having 2 to 10 carbon atoms, and

an inorganic filler (C) as an optional component,

wherein the MFR of the polypropylene-based resin composition at a temperature of 230 °C and a load of 2.16 kg is 0.1 to 3.0 g/10 minutes,

the total weight of the (A), (B) and (C) is 70 % by weight or more with respect to the total weight of the polypropylene-based resin composition,

the total weight of the (A) and (B) is 50 % by weight or more with respect to the total weight of the polypropylene-based resin composition,

the content of the (A) is 99 parts by weight or less, the content of the (B) is 1 part by weight or more, and the content of the (C) is 0 to 60 parts by weight with respect to the total 100 parts by weight of the (A), (B),

the content of ethylene-derived units in the propylene polymer (a1) is 0.5 % by weight or less with respect to the total weight of the propylene polymer (a1),

the content of the copolymer (a2) is 27 to 45 % by weight with respect to the total weight of the polypropylene-based resin (A),

the content of ethylene-derived units in the copolymer (a2) is 25 to 85 % by weight with respect to the total weight of the copolymer (a2),

the xylene-soluble portion of the polypropylene-based resin (A) has an intrinsic viscosity in tetrahydronaphthalene at 135 °C of 2.5 to 5.5 dl/g.

2. The polypropylene-based resin composition according to claim 1, wherein the crystallization peak observed between 85 and 105 °C has a calorific value of 0.5 to 10 J/g in DSC measurement of the polypropylene-based resin (A).

3. The polypropylene-based resin composition according to claim 1, wherein the propylene polymer (a1) has an average pore diameter of 8 to 50 $\mu$m.

4. The polypropylene-based resin composition according to claim 2, wherein the propylene polymer (a1) has an average pore diameter of 8 to 50 $\mu$m.

5. A sheet molding formed from the polypropylene-based resin composition according to claim 1.

6. The sheet molding according to claim 5, which is used to form a container.

7. A container formed from the sheet molding according to claim5.

[Figure 1]

10

[Figure 2]

20

[Figure 3]

## INTERNATIONAL SEARCH REPORT

International application No.

**PCT/JP2022/025362**

### A. CLASSIFICATION OF SUBJECT MATTER

*C08L 23/10*(2006.01)i; *B65D 65/40*(2006.01)i; *C08F 2/44*(2006.01)i; *C08F 255/02*(2006.01)i; *C08L 23/08*(2006.01)i; *C08L 23/16*(2006.01)i

FI: C08L23/10; C08L23/08; C08L23/16; C08F2/44 C; C08F255/02; B65D65/40 D

According to International Patent Classification (IPC) or to both national classification and IPC

### B. FIELDS SEARCHED

Minimum documentation searched (classification system followed by classification symbols)

C08L23/10; B65D65/40; C08F2/44; C08F255/02; C08L23/08; C08L23/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-204175 A (CHISSO CORP.) 25 July 2000 (2000-07-25) claims 1-3, paragraphs [0015], [0016], [0018]-[0022], [0033]-[0035], [0038]-[0056], examples 1,7 | 1-7 |
| A | JP 2017-136702 A (SUNALLOMER LTD.) 10 August 2017 (2017-08-10) paragraphs [0051]-[0070]A4 | 1-7 |
| A | US 2011/0207883 A1 (DOUFAS, Antonios K. et al.) 25 August 2011 (2011-08-25) paragraphs [0030]-[0047] | 1-7 |
| A | JP 06-240068 A (TOKUYAMA SODA CO., LTD.) 30 August 1994 (1994-08-30) paragraph [0003] | 1-7 |
| A | JP 2019-137848 A (PRIME POLYMER CO., LTD.) 22 August 2019 (2019-08-22) paragraph [0003] | 1-7 |
| A | JP 2008-506825 A (BASELL POLYOLEFINE GMBH) 06 March 2008 (2008-03-06) paragraphs [0063], [0064] | 1-7 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 September 2022** | **13 September 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

INTERNATIONAL SEARCH REPORT
Information on patent family members

| | International application No. |
| --- | --- |
| | **PCT/JP2022/025362** |

| Patent document cited in search report | | | Publication date (day/month/year) | Patent family member(s) | | | Publication date (day/month/year) |
| --- | --- | --- | --- | --- | --- | --- | --- |
| JP | 2000-204175 | A | 25 July 2000 | (Family: none) | | | |
| JP | 2017-136702 | A | 10 August 2017 | (Family: none) | | | |
| US | 2011/0207883 | A1 | 25 August 2011 | CA | 2732126 | A1 | |
| JP | 06-240068 | A | 30 August 1994 | (Family: none) | | | |
| JP | 2019-137848 | A | 22 August 2019 | (Family: none) | | | |
| JP | 2008-506825 | A | 06 March 2008 | US 2008/0027190 A1 paragraphs [0112], [0113] | | | |

Form PCT/ISA/210 (patent family annex) (January 2015)

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021105708 A
- JP 2019189818 A
- JP 2002520426 A
- EP 728769 A

- JP 2004027218 A
- JP 2011500907 A
- US 4399054 A

**Non-patent literature cited in the description**

- **KAKUGO, Y. NAITO ; K. MIZUNUMA ; T. MIYAT-AKE.** *Macromolecules,* 1982, vol. 15, 1150-1152